# EUROPÄISCHE PATENTANMELDUNG

(11) **EP 1 762 443 A1**
(43) Veröffentlichungstag der Anmeldung: **14.03.2007**
(21) Anmeldenummer: 06018005.6
(22) Anmeldetag: 29.08.2006
(51) Int. Cl.: B60R 21/20, B60R 21/276

(54) **Gassackmodul**

(30) Priorität: 13.09.2005 DE 202005014442 U
(71) Anmelder: TRW Automotive Safety Systems GmbH, 63743 Aschaffenburg (DE)
(72) Erfinder: Frisch, Ralph, 63776 Mömbris (DE); Freudenberger, Klaus, 63743 Aschaffenburg (DE); Kienzner, Andreas, 63831 Wiesen (DE); Schneider, Michael, 63834 Sulzbach (DE)
(74) Vertreter: Kitzhofer, Thomas

(57) **Zusammenfassung**

Ein Gassackmodul hat einen Gassack (18), einen Diffusorkäfig (14), der Ausströmöffnungen (16) zum Gassack (18) aufweist, einen Gasgenerator (12) und einen diesen umgebenden Lagerteil. Der Gasgenerator (12) ist unter dem Diffusorkäfig (14) angeordnet und über das Lagerteil modulseitig gehalten. Im Lagerteil sind ständig offene, vom Gassack (18) wegführende Abströmöffnungen (30) vorgesehen. Vom Gasgenerator (12) erzeugtes Gas kann aus einem vom Diffusorkäfig (14), dem Lagerteil und dem Gasgenerator (12) eingeschlossenen Raum (34) durch die Abströmöffnungen (30) abströmen.

## Beschreibung

Die Erfindung betrifft ein Gassackmodul mit einem Gassack, einem Diffusorkäfig, der Ausströmöffnungen zum Gassack aufweist, einem Gasgenerator und einem diesen umgebenden Lagerteil, wobei der Gasgenerator unter dem Diffusorkäfig angeordnet und über das Lagerteil modulseitig gehalten ist und im Lagerteil ständig offene, vom Gassack wegführende Abströmöffnungen vorgesehen sind.

Diffusorkäfige werden eingesetzt, um einen Zwischenraum zwischen dem Gasgenerator und dem Gassack zu schaffen und unter anderem den Kontakt von Gassackgewebe mit dem heißen Gasgenerator zu verhindern.

Im Standardfall wird bei der Aktivierung des Gassackmoduls der Gassack durch das vom Gasgenerator erzeugte Gas aufgeblasen, wobei dieser sich entfaltet. Es können jedoch auch Situationen auftreten, bei denen Gas gar nicht erst in den Gassack gelangen soll, sondern möglichst frühzeitig aus dem Gassackmodul in dessen Umgebung abgeleitet werden soll.

Die Erfindung strebt danach, die Sicherheit eines Gassackmoduls für den Fahrzeuginsassen zu erhöhen.

Hierzu kann bei einem oben genannten Gassackmodul das vom Gasgenerator erzeugte Gas aus einem vom Diffusorkäfig, dem Lagerteil und dem Gasgenerator eingeschlossenen Raum durch die Abströmöffnungen abströmen. Das Gas gelangt so ohne weite Wege direkt vom Gasgenerator zu den Abströmöffnungen. Durch diese Anordnung sind die Abströmöffnungen außerdem davor geschützt, durch Abschnitte des gefalteten Gassacks verdeckt zu werden. Auf diese Weise ist auch sichergestellt, daß auch vor Öffnen eines Modulgehäuses bzw. einer Abdeckkappe bei Zündung des Gasgenerators das von diesem erzeugte Gas aus dem Gassackmodul in die Umgebung abströmen kann.

Vorzugsweise liegen die Abströmöffnungen innerhalb des vom Diffusorkäfig umschriebenen Raumes.

Das Lagerteil ist nach einer bevorzugten Ausführungsform Bestandteil eines vom Gasgenerator separaten Generatorträgers. Das Lagerteil kann auch einstükkiger Bestandteil eines Modulgehäuses, z.B. eines den Boden eines Modulgehäuses bildenden Generatorträgers sein.

Alternativ kann das Lagerteil auch durch einen Generatorflansch gebildet sein.

Um die Platzverhältnisse, z.B. in einer Lenkradnabe, optimal auszunutzen, können die Abströmöffnungen in einem Abschnitt des Lagerteils liegen, der schräg oder parallel zu einer Achse des Gassackmoduls ausgerichtet ist. In diesem Fall ist die Gasströmung zumindest in Komponenten parallel zum Boden des Gasgenerators ausgerichtet, so daß ein direktes Anströmen einer der Abströmöffnung unmittelbar benachbarten Modul- oder Fahrzeugkomponente und ein damit verbundener Gasstau vermieden wird.

Die Abströmöffnungen können z.B. in einem Boden des Gassackmoduls angeordnet sein.

Das Gas gelangt durch die Abströmöffnungen nicht in den Gassack, sondern vorzugsweise direkt in eine Umgebung des Gassackmoduls.

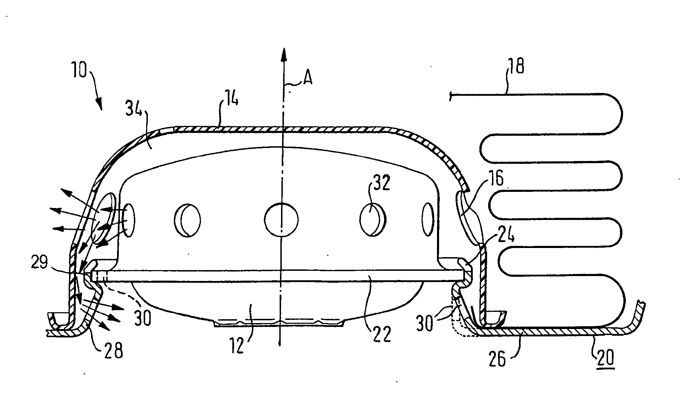

Die Erfindung wird im folgenden unter Bezug auf die beigefügte Zeichnung näher beschrieben. Die einzige Figur zeigt einen schematischen Schnitt durch ein erfindungsgemäßes Gassackmodul.

Die Figur zeigt ein Gassackmodul 10, das im dargestellten Beispiel zur Aufnahme in einem Lenkrad ausgelegt ist, mit einem Gasgenerator 12. Der Gasgenerator 12 ist unter einem Diffusorkäfig 14 angeordnet, der eine Reihe von Ausströmöffnungen 16 aufweist, die umlaufend in einer zylindrischen Wand des Diffusorkäfigs 14 angeordnet sind. Die Ausströmöffnungen 16 bilden eine Strömungsverbindung zwischen dem Gasgenerator 12 und einem Gassack 18, der vor Aktivierung des Gassackmoduls 10 gefaltet in einem angedeuteten Modulgehäuse 20 aufgenommen ist. Das Modulgehäuse 20 ist von einer nicht gezeigten Abdeckkappe verschlossen, die im Standardfall bei Aktivierung des Gassackmoduls geöffnet wird, um den Gassack 18 aus dem Gassackmodul 10 austreten zu lassen, damit sich dieser in seine gewünschte Position entfalten kann.

Der Gasgenerator 12 weist einen Generatorflansch 22 auf, der bereits vor der Montage fest, in diesem Beispiel einstückig, mit dem Gasgenerator 12 verbunden ist und diesen umfangsmäßig vollständig umgibt. Ein Generatorträger 24 mit einer Ausnehmung, in die der Gasgenerator 12 unter Anlage des Generatorflansches 22 eingesetzt ist, befestigt den Gasgenerator 12 modulseitig. Im gezeigten Beispiel ist der Generatorträger 24 einstückiger Bestandteil des Modulgehäuses 20 und bildet unter anderem auch den Boden 26 des Modulgehäuses 20. Der Gasgenerator 12 ist also von einem Lagerteil umgeben, das hier durch den Generatorträger 24 und den Generatorflansch 22 gebildet ist.

Der Generatorträger 24 weist einen ringförmigen Abschnitt 28 auf, der annähernd eine Kegelstumpfform hat. Der Abschnitt 28 liegt in diesem Beispiel unterhalb des Generatorflansches 22. Die Wand des Abschnittes 28 steht also schräg zu einer Achse A des Gassackmoduls 10, die in diesem Fall auch mit der Entfaltungsrichtung des Gassacks 18 zusammenfällt, wobei die Spitze des Kegelstumpfs in Richtung der Achse A weist.

Im schräg stehenden Abschnitt 28 des Generatorträgers 24 sind mehrere stets offene Abströmöffnungen 30 ausgebildet, die strömungsmäßig direkt mit einer Umgebung des Gassackmoduls 10 verbunden sind.

Die Wand des Abschnitts 28 könnte auch, wie in gestrichelten Linien in der rechten Hälfte der Figur gezeigt ist, senkrecht stehen, so daß die Abströmöffnungen 30 parallel zur Achse A liegen.

Die Abströmöffnungen 30 liegen innerhalb des Diffusorkäfigs 14, also radial innerhalb des vom Diffusorkäfig 14 eingeschlossenen Raumes.

Ein Rand des Diffusorkäfigs 14 reicht bis zum Boden 26 des Modulgehäuses 26 außerhalb des ringförmigen Abschnitts 28. Ein Einblasmund des Gassacks 18 ist zwischen dem Rand des Diffusorkäfigs 14 und dem Boden 26 des Modulgehäuses 20 geklemmt. Der Gassack 18 ist somit mit Abstand zu den Ausströmöffnungen 30 angeordnet und wird durch den Diffusorkäfig 14 vollständig von diesen ferngehalten.

Wird das Gassackmodul 10 aktiviert, erzeugt der Gasgenerator 12 Gas, das aus Auslaßöffnungen 32 in der Umfangswand des Gasgenerators 12 ausströmt. Das Gas gelangt zunächst in einen vom Diffusorkäfig 14, dem Gasgenerator 12 und dem Lagerteil aus Generatorflansch 22 und Generatorträger 24 eingeschlossenen Raum 34. Von dort kann das Gas durch die Ausströmöffnungen 16 im Diffusorkäfig 14 (die auch stets offen sind) in den Gassack 18 gelangen. Über die Abströmöffnungen 30 besteht aber auch eine direkte Strömungsverbindung zwischen dem Raum 34 und der Umgebung des Gassackmoduls 10, durch die das Gas aus dem Raum 34 vom Gassack 18 weg direkt aus dem Gassackmodul 10 abströmen kann. Dies wird z.B. benötigt, wenn der Gasgenerator 12 unter Bedingungen gezündet wird, in denen ein Öffnen der Abdeckkappe nicht erwünscht ist. In diesem Fall kann das gesamte vom Gasgenerator 12 erzeugte Gas durch die Abströmöffnungen 30 das Gassackmodul 10 verlassen. Die Gasströmungen sind in der linken Hälfe der Figur durch Pfeile gekennzeichnet.

In einer anderen Ausführungsform sind die Abströmöffnungen 30 im Generatorflansch 22 ausgebildet, wie in der linken Hälfte der Figur mit gestrichelten Linien angedeutet ist.

Das Lagerteil kann, wie hier gezeigt, aus einer Kombination des Generatorflansches 22 und des Generatorträgers bestehen. Es kann aber auch nur durch den Generatorflansch 22 oder nur durch den Generatorträger gebildet sein. Die Ausströmöffnungen 30 können in jedem geeigneten Abschnitt des Lagerteils angeordnet sein.

Der ringförmige Abschnitt 28 ist im gezeigten Beispiel einstückiger Bestandteil des Generatorflansches 22. Er geht hier direkt in einen Halteabschnitt 29 über, der den Rand des Generatorflansches 22 umgreift und so den Gasgenerator 12 am Generatorträger 24 fixiert.

Der Gasgenerator 12 läßt sich auch direkt, z.B. über den Generatorflansch 22, mit dem Modulgehäuse oder einem fahrzeugfesten Bauteil verbinden. Zu Befestigung des Generatorflansches 22 und/oder des Generatorträger 24 mit dem Modulgehäuse 20 oder direkt mit einem fahrzeugfesten Bauteil sind z.B. auch konventionelle Schraubbolzen einsetzbar.

## Patentansprüche

1. Gassackmodul mit
einem Gassack (18),
einem Diffusorkäfig (14), der Ausströmöffnungen (16) zum Gassack (18) aufweist,
einem Gasgenerator (12) und einem diesen umgebenden Lagerteil,
wobei der Gasgenerator (12) unter dem Diffusorkäfig (14) angeordnet und über das Lagerteil modulseitig gehalten ist und im Lagerteil ständig offene, vom Gassack (18) wegführende Abströmöffnungen (30) vorgesehen sind,
**dadurch gekennzeichnet, daß** vom Gasgenerator (12) erzeugtes Gas aus einem vom Diffusorkäfig (14), dem Lagerteil und dem Gasgenerator (12) eingeschlossenen Raum (34) durch die Abströmöffnungen (30) abströmen kann.

2. Gassackmodul nach Anspruch 1, **dadurch gekennzeichnet, daß** die Abströmöffnungen (30) innerhalb des vom Diffusorkäfig umschriebenen Raumes (14) liegen.

3. Gassackmodul nach einem der vorhergehenden Ansprüche, **dadurch gekennzeichnet, daß** das Lagerteil Bestandteil eines vom Gasgenerator (12) separaten Generatorträgers (24) ist.

4. Gassackmodul nach Anspruch 3, **dadurch gekennzeichnet, daß** das Lagerteil einstückiger Bestandteil eines Modulgehäuses (20) ist.

5. Gassackmodul nach einem der Ansprüche 1 und 2, **dadurch gekennzeichnet, daß** das Lagerteil ein Generatorflansch (22) ist.

6. Gassackmodul nach einem der vorhergehenden Ansprüche, **dadurch gekennzeichnet, daß** die Abströmöffnungen (30) in einem Abschnitt des Lagerteils liegen, der schräg oder parallel zu einer Achse (A) des Gassackmoduls (10) ausgerichtet ist.

7. Gassackmodul nach einem der vorhergehenden Ansprüche, **dadurch gekennzeichnet, daß** die Abströmöffnungen (30) in einem Boden (26) des Gassackmoduls (10) angeordnet sind.

8. Gassackmodul nach einem der vorhergehenden Ansprüche, **dadurch gekennzeichnet, daß** Gas über die Abströmöffnungen (30) direkt aus dem Gassackmodul (10) abströmen kann.
